# FASCICULE DE BREVET EUROPEEN

(11) **EP 1 120 590 B1**
(45) Date de publication et mention de la délivrance du brevet: **10.09.2003**
(21) Numéro de dépôt: 01200112.9
(22) Date de dépôt: 15.01.2001
(51) Int. Cl.: F16K 1/30

(54) **Robinet pour gaz comprimés ou liquéfiés**
Ventil für komprimiertes oder flüssiges Gas
Valve for compressed or liquified gas

(30) Priorité: 24.01.2000 LU 90508
(43) Date de publication de la demande: 01.08.2001
(73) Titulaire: LUXEMBOURG PATENT COMPANY S.A., 1720 Luxembourg (LU)
(72) Inventeur: Kremer, Paul, 7263 Walferdange (LU)
(74) Mandataire: Meyers, Ernest

(56) Documents cités:
- EP-A- 0 496 091
- GB-A- 2 292 785
- LU-A- 90 254
- US-A- 5 738 145

## Description

La présente invention concerne un robinet pour gaz comprimés ou liquéfiés comprenant un corps renfermant un organe de fermeture pour ouvrir ou fermer le passage du gaz entre un raccord d'entrée et un raccord de sortie, ainsi qu'un clapet de contrôle pour commander l'écoulement du gaz entre le raccord d'entrée et le raccord de sortie et comprenant un piston coulissant de manière non étanche dans un logement cylindrique et portant sur l'une de ses faces un joint de fermeture pour fermer le passage du gaz et un ressort sollicitant ledit piston axialement dans le sens de fermeture du passage.

Un robinet de ce genre est décrit dans le document EP-A1-0 458 253. Le clapet de contrôle dans ce robinet est un clapet de pression résiduelle destiné à éviter une vidange complète de la bouteille ou du réservoir sur lequel le robinet est monté. Il s'agit d'une mesure bien connue pour empêcher la pénétration d'impuretés ou d'humidité à travers un robinet utilisé notamment avec des gaz desquels on exige un degré de pureté élevé comme, par exemple, ceux qui sont utilisés pour le dopage des semi-conducteurs.

Le clapet de pression résiduelle est soumis à l'action d'un ressort calibré qui sollicite le piston de fermeture vers sa position de fermeture. Toutefois, lors du soutirage, la pression du gaz est normalement suffisante pour refouler le piston contre la force de son ressort et maintenir le clapet en position ouverte. Ce n'est que lorsque le réservoir commence à se vider et que la pression du gaz tombe en dessous de la pression de calibrage du ressort que celui-ci ferme le clapet contre la pression du gaz et empêche la sortie du gaz.

On a constaté que ces robinets équipés d'un clapet de pression résiduelle émettent du bruit lors du soutirage du gaz et plus particulièrement à un débit déterminé. Cette émission de bruit peut s'expliquer de la manière suivante. Lorsque le débit du soutirage est inférieur au débit disponible en provenance du réservoir de gaz, la totalité du gaz ne peut pas partir à travers la sortie du robinet. Or, vu que le piston du clapet doit obligatoirement être guidé de manière non étanche dans son logement afin de pouvoir y coulisser, le gaz pénètre derrière le piston. Cette accumulation de gaz sous pression derrière le piston fait que la pression du gaz de part et d'autre du piston s'équilibre. Par conséquent, le piston n'est soumis qu'à la force de son ressort et se ferme sous l'action de celui-ci. Toutefois, tant qu'il est fermé, la poursuite du soutirage à travers la sortie du robinet fait baisser la pression du gaz derrière la pression si bien que la pression du gaz en provenance du réservoir devient, à nouveau, suffisante pour lever le piston de son siège contre l'action de son ressort. Il y a donc à nouveau un excédent de gaz qui fait monter la pression derrière le piston pour le fermer finalement à nouveau. Cette succession d'ouvertures et de fermetures se répète à une cadence très rapide et engendre une sorte de résonance du clapet qui est à l'origine du bruit. Ces vibrations sont non seulement gênantes pour l'opérateur à cause du bruit mais sont également à l'origine d'une usure rapide, notamment des joints.

Ce phénomène n'a pas seulement été observé dans les robinets avec un clapet de pression résiduelle, mais également dans les robinets équipés d'un détendeur de pression, c'est-à-dire un clapet de réglage de la pression comme dans le document EP-B1-0 496 091.

Le but de la présente invention est de prévoir un robinet du genre décrit dans le préambule dans lequel les vibrations intempestives du clapet de contrôle ainsi que les inconvénients qui en découlent sont éliminés ou, du moins, réduits de manière substantielle.

Pour atteindre cet objectif, l'invention prévoit un robinet du genre décrit dans le préambule qui est caractérisé en ce que ledit ressort est monté dans une poche cylindrique axiale du piston et est comprimé entre le fond de ladite poche et un bloc cylindrique qui est engagé également, au moins partiellement, dans ladite poche et comprenant un joint assurant l'étanchéité avec la paroi latérale de ladite poche lors du coulissement du piston par rapport audit bloc et en ce que ledit bloc comporte un canal axial pourvu de moyens pour freiner le passage du gaz à travers ce canal, ces moyens pouvant être un filtre.

Le filtre peut être en métal fritté et perméable au gaz mais qui y oppose une certaine résistance à la traversée. En raison de cette résistance au passage des gaz, le filtre freine le mouvement du piston et augmente le temps de réaction en réponse à la poussée de la pression des gaz et du ressort. En fait, les filtres jouent le rôle d'un amortisseur qui empêche le clapet d'entrer en résonance et d'émettre du bruit.

Selon un mode de réalisation avantageux, le clapet se présente sous forme de cartouche compacte amovible comprenant un capuchon pouvant être vissé sur un raccord du robinet et dont l'intérieur définit le logement cylindrique du piston d'ouverture et de fermeture.

D'autres particularités ressortiront de la description détaillée d'un mode de réalisation avantageux, présenté ci-dessous, à titre d'illustration, en référence aux dessins annexés dans lesquels
- la figure 1 est une vue en perspective d'un robinet selon la présente invention ;
- la figure 2 est une section horizontale du robinet suivant un plan de coupe passant par l'axe du raccord de sortie et
- la figure 3 est une vue en coupe du clapet de pression résiduelle isolée.

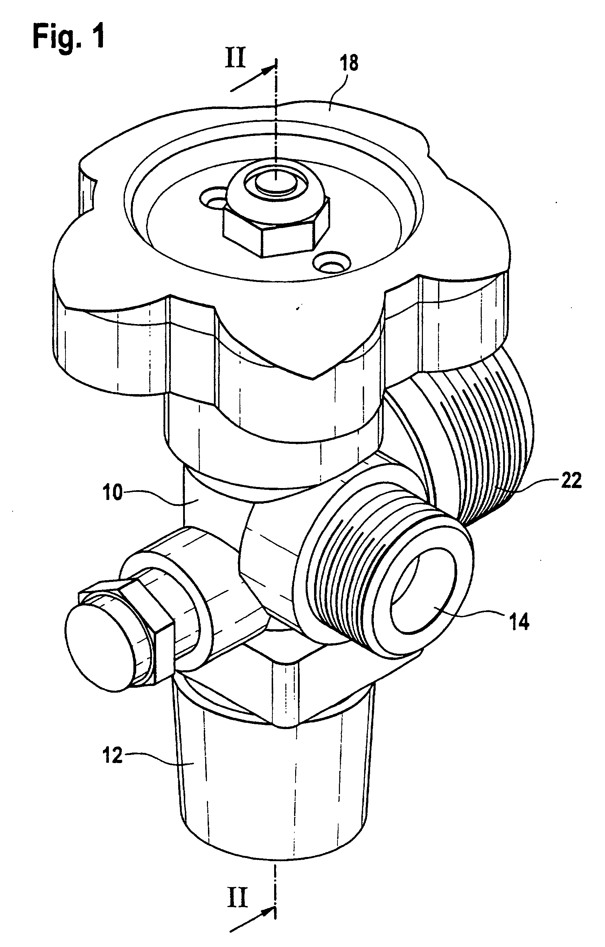

Le robinet montré sur la figure 1 comporte un corps 10, par exemple en laiton, avec un raccord axial d'entrée 12 qui est doté d'un filetage extérieur permettant au robinet d'être vissé sur un réservoir, par exemple une bonbonne de gaz. Le corps 10 comporte également un raccord de sortie 14 qui communique à travers un passage intermédiaire 16 avec le raccord d'entrée 12. Dans ce passage intérieur 16 se trouve l'organe de fermeture principal, non montré, du robinet, qui est actionné par un volet de manoeuvre extérieur 18.

Le robinet comporte, par ailleurs, au niveau du raccord de sortie 14, un autre raccord radial 22 dans lequel est vissé un clapet de pression résiduelle 20 qui sert à couper le passage intérieur 16 lorsque la pression du gaz tombe en dessous d'une valeur prédéterminée. Sur la figure 1, le clapet 20 se trouve dans une telle position de fermeture, empêchant la traversée du gaz du passage 16 vers le raccord de sortie 14.

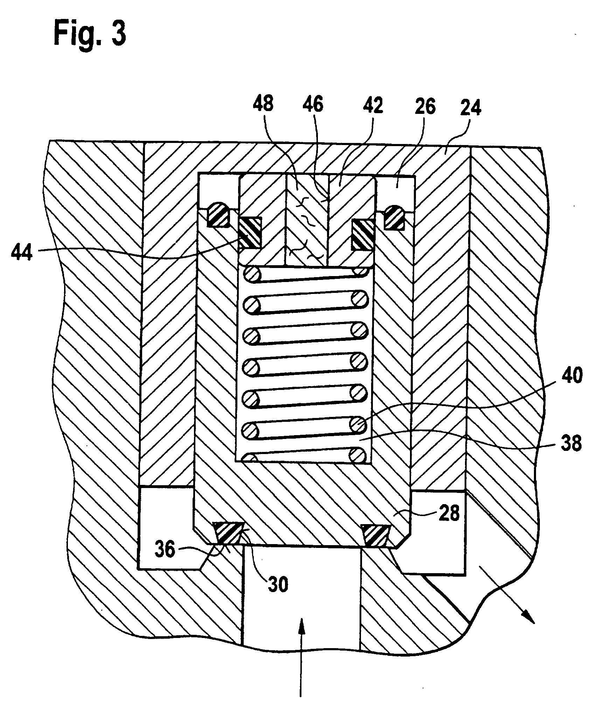

Le clapet 20 se présente sous forme d'une cartouche compacte (voir figure 3) comprenant un capuchon cylindrique 24 pouvant être vissé dans le raccord 22. L'intérieur du capuchon 24 forme un logement cylindrique 26 d'un piston 28 également cylindrique et pouvant coulisser axialement dans le logement 26. Il n'y a pas d'étanchéité entre le piston 28 et le capuchon, si bien que les gaz sous pression peuvent pénétrer le long de la paroi du piston 28 vers le fond du logement 26.

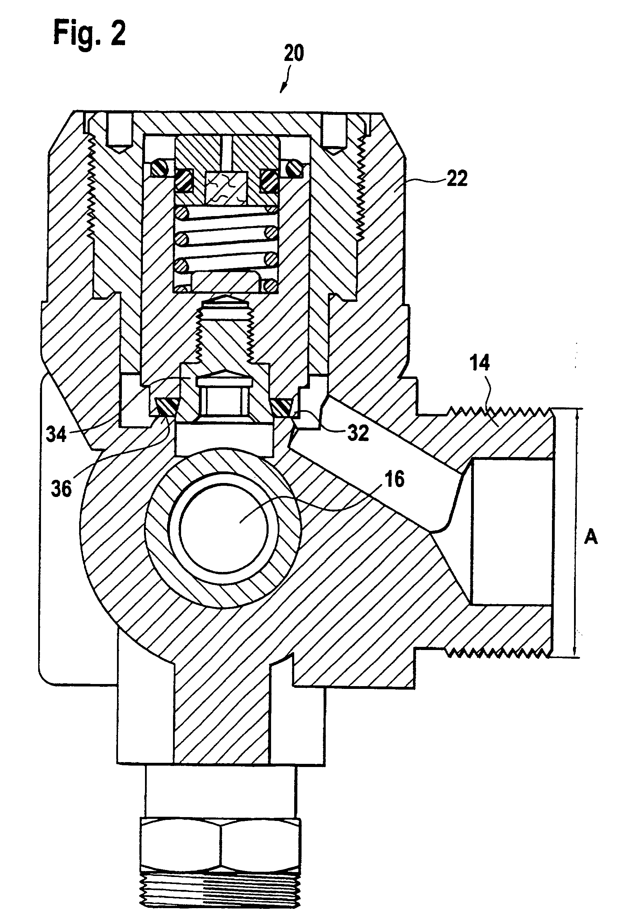

Sur la face intérieure du piston 28 se trouve un joint annulaire 30 qui peut être maintenu en place entre un bord périphérique 32 et une cale centrale 34 pouvant être vissée dans la tête du piston 32 comme sur la figure 2, ou qui peut simplement être logé dans une gorge frontale comme sur la figure 3. Le joint 30 coopère avec un siège annulaire 36 du corps du robinet pour interrompre, dans la position fermée de la figure 2, l'écoulement du gaz du passage 16 vers le raccord de sortie 14.

Sur la face opposée au joint 30, le piston 28 possède une poche axiale cylindrique 38 dans laquelle se trouve un ressort hélicoïdal 40 qui est comprimé entre le fond de la poche 38 et un bloc cylindrique se trouvant également partiellement ou totalement dans la poche suivant la position du clapet et s'appuyant sur le fond du capuchon 24. Le bloc 42 porte à sa périphérie un joint, par exemple un joint torique 44 qui assure l'étanchéité avec la paroi latérale de la poche 38. Cette configuration permet, par conséquent, au piston 28 de coulisser axialement par rapport au capuchon 24 et par rapport au bloc 42 sous l'action du ressort 40 ou de la pression des gaz.

Toutefois, pour permettre ce coulissement du piston 28 qui est forcément accompagné par une variation du volume de la poche 38, celle-ci doit, à cause de l'étanchéité assurée par le joint 44, être en communication avec le fond du logement 26 afin de pouvoir chasser les gaz de la poche lors de l'ouverture (diminution du volume de la poche 38) du clapet et d'aspirer les gaz lors de la fermeture du clapet (augmentation du volume de la poche 38).

A cet effet, le bloc 42 comporte un canal axial 46 qui est ouvert sur le fond du logement 26. Dans ce canal 46 et coincé dans le bloc 42 se trouve un filtre 48 qui peut être une pastille de métal fritté. Le filtre peut s'étendre sur toute la longueur du canal ou sur une certaine distance comme sur la figure 1. Ce métal peut être traversé par le gaz mais il y oppose une certaine résistance de manière à ralentir le mouvement axial du piston 28 lors de l'ouverture et de la fermeture du clapet et de jouer en quelque sorte un rôle d'amortisseur pneumatique. On a constaté qu'en freinant de cette manière suffisamment le mouvement du piston, il est possible de réduire sensiblement les vibrations résonantes du piston et même de les éliminer carrément.

Le filtre 48 n'est qu'un exemple de freinage du passage des gaz et peut être remplacé par des moyens équivalents tel qu'un étranglement très fin.

## Revendications

1. Robinet pour gaz comprimés ou liquéfiés comprenant un corps (10) renfermant un organe de fermeture pour ouvrir ou fermer le passage du gaz entre un raccord d'entrée (12) et un raccord de sortie (14), ainsi qu'un clapet de contrôle (20) pour commander l'écoulement du gaz entre le raccord d'entrée (12) et le raccord de sortie (14) et comprenant un piston (28) coulissant de manière non étanche dans un logement cylindrique (26) et portant sur l'une de ses faces un joint de fermeture (30) pour fermer le passage du gaz et un ressort (40) sollicitant ledit piston (28) axialement dans le sens de fermeture du passage, **caractérisé en ce que** ledit ressort (40) est monté dans une poche cylindrique axiale (38) du piston (28) et est comprimé entre un fond de ladite poche (38) et un bloc cylindrique (42) qui est engagé également, au moins partiellement dans ladite poche (38) et comprenant un joint (44) assurant l'étanchéité avec la paroi latérale de ladite poche (38) lors du coulissement du piston (28) par rapport audit bloc (42) et **en ce que** ledit bloc (42) comporte un canal axial (46) pourvu de moyens pour freiner le passage du gaz à travers ce canal (46).

2. Robinet selon la revendication 1, **caractérisé en ce que** les moyens pour freiner le passage du gaz sont constitués par un filtre (48).

3. Robinet selon la revendication 2, **caractérisé en ce que** le filtre (48) est en métal fritté qui est perméable au gaz mais oppose une certaine résistance à la traversée du gaz.

4. Robinet selon la revendication 1, **caractérisé en ce que** le clapet (20) se présente sous forme d'une cartouche compacte amovible comprenant un capuchon (24) pouvant être vissé sur un raccord (22) du robinet et dont l'intérieur définit le logement cylindrique (26) du piston d'ouverture et de fermeture (28).

## Patentansprüche

1. Absperrorgan für komprimiertes oder verflüssigtes Gas mit einem Gehäuse (10) das ein Schliessorgan um den Gasdurchfluss zwischen einem Eingangsstutzen (12) und einem Ausgangsstutzen (14) zu öffnen oder zu schliessen enthält, mit einem Steuerventil (20) um den Gasdurchfluss zwischen dem Eingangsstutzen (12) und dem Ausgangsstutzen (14) zu steuern, und welches einen Kolben (28) aufweist, der nicht hermetisch in einer zylindrischen Kammer (26) gleitet und auf einer seiner Grundflächen eine Schliessdichtung (30) aufweist um den Gas-durchfluss abzusperren wobei der Kolben (28) von einer Feder (40) axial in Richtung Absperrung des Gasdurchflusses beaufschlagt wird, **dadurch gekennzeichnet dass** die Feder (40) in einer axialen zylindrischen Ausbohrung (38) des Kolbens (28) angeordnet ist und zwischen einem Boden der Ausbohrung (38) und einem zylindrischen Block (42) der ebenfalls zumindest teilweise auch in die Ausbohrung (38) dringt zusammengedrückt ist und welcher eine Dichtung (44) aufweist, welche an der Seitenfläche der Ausbohrung (38) abdichtet wenn der Kolben (28) sich gegenüber dem Block (42) verschiebt und dass der Block (42) einen axialen Kanal (46) aufweist mit Mitteln um den Durchgang des Gases durch diesen Kanal zu bremsen.

2. Absperrorgan nach Anspruch 1, **dadurch gekennzeichnet, dass** die Mittel zum Bremsen des Gasdurchgangs aus einem Filter (48) bestehen.

3. Absperrorgan nach Anspruch 2, **dadurch gekennzeichnet, dass** der Filter (48) aus Sintermetall besteht das gasdurchlässig ist, aber dem Gasdurchtritt einen gewissen Widerstand bietet.

4. Absperrorgan nach Anspruch 1, **dadurch gekennzeichnet, dass** das Ventil (20) die Form einer lösbaren kompakten Kartusche hat mit einer Ventilkappe (24) welche in einen Stutzen (22) des Absperrorgans geschraubt werden kann und dessen Innenteil die Zylinderkammer (26) der Öffnungs- und Schliesskolbens (28) bildet.

## Claims

1. Tap for compressed or liquefied gases, comprising a body (10) containing a closing member for opening or closing the passage of the gas between an inlet connection piece (12) and an outlet connection piece (14), and also a control valve (20) for controlling the flow of the gas between the inlet connection piece (12) and the outlet connection piece (14) and comprising a piston (28) sliding non-sealingly in a cylindrical receptacle (26) and carrying on one of its faces a closing seal (30) for closing the passage of the gas, and a spring (40) stressing said piston (28) axially in the closing direction of the passage, **characterized in that** said spring (40) is mounted in an axial cylindrical pocket (38) of the piston (28) and is compressed between the bottom of said pocket (38) and a cylindrical block (42) which is likewise engaged at least partially in said pocket (38), said cylindrical block comprising a seal (44) ensuring leaktightness relative to the side wall of said pocket (38) during the sliding of the piston (28) relative to said block (42), and **in that** said block (42) comprises an axial duct (46) provided with means for braking the passage of the gas through this duct (46).

2. Tap according to claim 1, **characterized in that** the means for braking the passage of gas consist of a filter (48).

3. Tap according to claim 2, **characterized in that** the filter (48) is made of metal which is sintered and is permeable to the gas, but opposes some resistance to the passage of the gas.

4. Tap according to claim 1, **characterized in that** the valve (20) takes the form of a removable compact cartridge comprising a cap (24) which is capable of being screwed onto a connection piece (22) of the tap and the interior of which defines the cylindrical receptacle (26) of the opening and closing piston (28).
